# EUROPÄISCHE PATENTSCHRIFT

(11) **EP 3 264 904 B1**
(45) Veröffentlichungstag und Bekanntmachung des Hinweises auf die Patenterteilung: **05.05.2021**
(21) Anmeldenummer: 15707644.9
(22) Anmeldetag: 03.03.2015
(51) Int. Cl.: A22C 25/14

(54) **WERKZEUG UND VORRICHTUNG ZUM ENTWEIDEN VON FISCHEN MITTELS SAUG- UND SCHABEELEMENTEN**
TOOL AND DEVICE FOR EVISCERATING FISH BY MEANS OF SUCTION AND SCRAPING ELEMENTS
OUTIL ET DISPOSITIF POUR ÉVISCÉRER DES POISSONS AVEC DES ÉLEMENTS DE SUCTION ET RACLAGE

(43) Veröffentlichungstag der Anmeldung: 10.01.2018
(73) Patentinhaber: Nordischer Maschinenbau Rud. Baader GmbH + Co. KG, 23560 Lübeck (DE)
(72) Erfinder: PAULSOHN, Carsten, 23568 Lübeck (DE)
(74) Vertreter: Stork Bamberger Patentanwälte PartmbB
(86) Internationale Anmeldenummer: PCT/EP2015/054433
(87) Internationale Veröffentlichungsnummer: WO 2016/138941

(56) Entgegenhaltungen:
- WO-A1-2007/128386
- DE-B1- 2 832 259
- FR-A1- 2 616 625
- US-B1- 7 179 163
- US-B2- 8 900 039

## Beschreibung

Die vorliegende Erfindung betrifft ein Werkzeug zum Entweiden von in der Bauchhöhle geöffneten Fischen, umfassend ein Saugelement mit einem Saugkopf zum Absaugen der Eingeweide und mindestens ein dem Saugelement zugeordnetes Schabeelement. Des Weiteren betrifft die Erfindung eine Vorrichtung zum Entweiden von in der Bauchhöhle geöffneten Fischen, umfassend mindestens ein Werkzeug zum Absaugen der Eingeweide, ein zum Erfassen der Fischgeometrie eingerichtetes Messmittel, mindestens ein zum Steuern des Werkzeugs in Abhängigkeit der von dem Messmittel erfassten Fischgeometrie ausgebildetes Steuermittel und mindestens eine zum Bewegen des Werkzeugs relativ zu dem Fisch eingerichtete Positioniereinrichtung.

Das eingangs genannte Werkzeug bzw. die genannte Vorrichtung wird insbesondere beim automatisierten Schlachten von Fischen eingesetzt. Derartige Werkzeuge und Vorrichtungen sind beispielsweise aus dem Dokument WO 2007/128386 aus dem Hause der Anmelderin, sowie aus dem Dokument US 7 179 163 bekannt. Nach dem Offnen der Bauchhöhle der Fische wird mindestens ein Werkzeug zum Absaugen der Eingeweide und zum Reinigen in die geöffnete Bauchhöhle eingeführt. Die Eingeweide werden mittels eines Kombinationswerkzeuges bestehend aus einem Saugelement und einem Element zum Klemmen/ Quetschen gefasst und durch Absaugen aus der Bauchhöhle entfernt. Während des Entweidevorgangs wird das Kombinationswerkzeug vertikal bis zum Bauchhöhlengrund eingeführt und horizontal zunächst in Richtung Anus verfahren. Nach Erreichen des Anus wird das Werkzeug in Richtung des kopfseitigen Endes der Bauchhöhle verfahren.

An dem aus dem Dokument WO 2007/128386 bekannten Saugelement ist ein zusätzliches Schabeelement vorgesehen. Das Schabeelement ist so dimensioniert, dass es gegenüber dem Saugelement einen Überstand bildet und so mit noch an den Fischinnenflanken vorhandenen Eingeweidereste in Kontakt kommt, um diese abzulösen. Nachteilig ist, dass trotz des Einsatzes der vorgenannten Werkzeuge zum Entweiden und Reinigen der Bauchhöhle, Eingeweidereste in der Bauchhöhle verbleiben.

Es ist daher Aufgabe der vorliegenden Erfindung, ein Werkzeug vorzuschlagen, dass eine vollständige Entfernung von Blut- und/oder Eingeweideresten gewährleistet. Des Weiteren besteht die Aufgabe darin, eine Vorrichtung zum automatisierten Entweiden unter Einsatz eines solchen Werkzeugs vorzuschlagen.

Die Aufgabe wird durch ein Werkzeug mit den technischen Merkmalen des Anspruchs 1 gelöst, indem das Schabeelement an dem Saugelement um mindestens eine Achse derart schwenkbar angeordnet ist, dass das Schabeelement relativ zu dem Saugkopf bewegbar ausgebildet und eingerichtet ist. Auf diese Weise wird die Reinigungswirkung des Werkzeugs gegenüber den bekannten Werkzeugen maßgeblich verbessert. Die Beweglichkeit des Schabeelements relativ zu dem Saugelement führt dazu, dass das Schabeelement exakt der jeweiligen Fischkörpergeometrie folgen kann, und so die Eingeweide sowie Eingeweidereste mit höherer Präzision abgelöst werden. Dies wird durch eine mechanische Entkopplung des Schabeelements von dem Saugelement erreicht. Zwar bilden das Saugelement und das Schabeelement zusammen eine Werkzeugeinheit, die gemeinsam in die geöffnete Bauchhöhle eingeführt wird, jedoch ist das Werkzeug derart ausgebildet und eingerichtet, dass das Schabeelement während des Entweidevorgangs innerhalb der Bauchhöhle weitestgehend unabhängig von dem Saugelement bewegt werden kann. So lassen sich insbesondere an der Bauchinnenwand festgewachsene Darmreste zuverlässig entfernen.

Die Erfindung ist weiter dadurch gekennzeichnet, dass das Schabeelement mittels eines Schwenkarmes an dem Saugelement schwenkbar angeordnet ist. So ist das Schabeelement zumindest in der Mittelebene des Fisches, die durch die Mittelgräte und die Fischmitte verläuft, freibewegbar ausgebildet. Hierdurch ist das Schabeelement hinsichtlich der Eintauchtiefe in die Bauchhöhle positionierbar eingerichtet. Zugleich führt das Schabeelement beim Verändern der Schwenkposition einen Bewegung in Richtung der Kopf-Schwanz-Ausrichtung des Fisches aus, was den Schabevorgang zusätzlich unterstützt und so insgesamt den Grad der Vollständigkeit beim Entfernen der Eingeweide bzw. von Eingeweideresten deutlich erhöht.

Die Erfindung zeichnet sich dadurch aus, dass an dem Schwenkarm ein zum Verändern der Position des Schabeelements relativ zu dem Saugkopf eingerichtetes Verstellmittel angeordnet ist. Mittels des Verstellmittels kann der Schwenkarm zusätzlich mit einer Kraft be- oder entlastet werden, um beispielsweise das Schabeelement mit erhöhter Kraft an die zu reinigenden Teile in der Bauchhöhle zu drücken.

Gemäß einer weiteren bevorzugten Ausbildung der Erfindung ist der Schwenkarm bezüglich der Achse zweiarmig ausgebildet, wobei das Schabeelement an einem ersten Arm und das Verstellmittel an einem zweiten Arm des Schwenkarmes angeordnet ist. Mit anderen Worten ist der Schwenkarm als zweiarmiger Hebel ausgebildet. Dies bietet den Vorteil, dass für die Anordnung des Verstellmittels an dem zweiten Arm des Schwenkarms ausreichend Raum zur Verfügung steht, da diese nicht im Bereich des Saugelements angeordnet sind.

Gemäß der Erfindung ist das Verstellmittel als Federelement ausgebildet. Dies führt dazu, dass das Schabeelement federbelastet ist und folglich automatisch der Bauchhöhlengeometrie folgend gegen den Bauchhöhlengrund im Bereich der Mittelgräte gedrückt wird. Auf diese Weise wird erreicht, dass das Schabeelement unter Kraftbeaufschlagung an den Innenseiten der zu reinigenden Teile der Bauchhöhle, insbesondere im Bereich der Mittelgräte anliegt, jedoch zugleich federnd ausweichen kann.

Eine weitere zweckmäßige Ausgestaltung der Erfindung ist dadurch gekennzeichnet, dass das Federelement zum Voreinstellen der Federkraft ausgebildet und eingerichtet ist. Dies bietet den Vorteil, dass durch Voreinstellung der Federkraft die Andruckkraft vorgegeben wird, mittels derer das Schabeelement gegen die Innenwandungen in der Bauchhöhle gedrückt wird. So kann einerseits sichergestellt werden, dass die Andrucckraft ausreichend groß ist, um die Entfernung der anhaftenden Eingeweide und/oder Eingeweidereste zu gewährleisten. Andererseits wird durch Vermeidung zu großer Andruckkräfte eine Beschädigung bzw. Verletzung des Fischkörpers vermieden.

Gemäß einer weiteren bevorzugten Ausbildung der Erfindung umfasst das Verstellmittel einen steuerbaren Aktor. So kann das Schabeelement aktiv in die jeweils optimale Position gebracht werden. Vorzugsweise umfasst das Verstellmittel einen oder mehrere Aktoren. Alternativ umfasst das Verstellmittel sowohl einen Aktor als auch eines der Federelemente, so dass das Verstellmittel als Kombinationselement aus einem der Federelemente und einem Aktor aufgebaut ist. Beispielsweise ist der Aktor ferner dazu eingerichtet, das Saugelement in eine vorgegebene Position zu bewegen, während das Federelement für eine entsprechende Anlagekraft auf den Bereich um die Mittelgräte des Fisches sorgt und so das Saugelement federnd in Anlage bringt.

Eine weitere zweckmäßige Ausbildung der Erfindung zeichnet sich dadurch aus, dass der Aktor zum Ausführen einer oszillierenden Bewegung ausgebildet und eingerichtet ist. Durch die oszillierende Bewegung wird der Ablösevorgang der Eingeweiden sowie der Eingeweideresten zusätzlich unterstützt. Insbesondere können auf diese Weise abgelöste Teile während einer Hebephase des Schabeelements unter diesem hindurchgleiten und mittels des Saugelements abgesaugt werden. Sobald das Schabeelement wieder auf die Mittelgräte abgesenkt ist, übernimmt das Schabeelement wieder seine eigentliche Schabe- bzw. Kratzfunktion. Durch die oszillierende Bewegung des Schabeelements wiederholt sich der Vorgang kontinuierlich. Besonders bevorzugt ist der Aktor ein Pneumatikzylinder. Zur Realisierung der oszillierenden Bewegung wird der Pneumatikzylinder um die jeweilige Ruhelage oszillierend ausgelenkt. Vorzugsweise umfasst die vorliegende Erfindung eine Mehrzahl der Schabeelemente, die unabhängig voneinander bewegbar ausgebildet und eingerichtet sind. Besonders bevorzugt sind zwei der Schabeelemente vorgesehen, die jeweils mit mindestens einem der Aktoren bewegbar eingerichtet sind. Weiter bevorzugt sind die jeweiligen Aktoren zum Ausführen einer oszillierenden Bewegung ausgebildet, wobei insbesondere die beiden Aktoren gegenläufige Bewegungen ausführen, so dass die Schabeelemente im Gegentakt auf und ab bewegt werden. Dies bietet den Vorteil, dass jeweils eines der Schabeelemente im Bereich der Mittelgräte mit dem zu entweidenden Fisch in Kontakt ist, während das jeweils andere der Schabeelemente sich in einem Bewegungszustand befindet, in dem dieses keinen unmittelbaren Kontakt mit dem genannten Bereich hat.

Die vorliegende Erfindung ist jedoch nicht auf zwei der Schabeelemente beschränkt, vielmehr ist es vorteilhaft mehr als zwei der Schabeelemente unabhängig voneinander bewegbar anzuordnen.

Eine zweckmäßige Ausgestaltung der Erfindung zeichnet sich dadurch aus, dass das Schabeelement als eine Schabeplatte ausgebildet ist, wobei die den Fischflanken zugewandte Seiten der Schabeplatte zumindest jeweils auf einem Teilbereich eine Struktur aufweisen. Die Struktur unterstützt zusätzlich die Schabewirkung der Schabeplatte und verbessert so das Reinigungsergebnis.

Gemäß einer weiteren vorteilhaften Ausführungsform der Erfindung ist vorgesehen, dass der Saugkopf ein Klemmelement zum Klemmen und/oder Quetschen der zu entfernenden Eingeweide umfasst. Das Klemmelement ist zum Erfassen der Eingeweide durch Klemmen und/der Quetschen eingerichtet und ausgebildet, so dass die zu entfernenden Eingeweide zunächst mit dem Klemmelement gefasst und anschließend abgesaugt werden können.

Des Weiteren wird die Aufgabe durch eine Vorrichtung mit den eingangs genannten Merkmalen dadurch gelöst, dass das Werkzeug nach einem der Ansprüche 1 bis 8 ausgebildet ist.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert.

In der Zeichnung zeigt:
- Fig. 1: eine perspektivische Ansicht des erfindungsgemäßen Werkzeugs und
- Fig. 2: eine Seitenansicht des in Figur 1 gezeigten Werkzeugs.

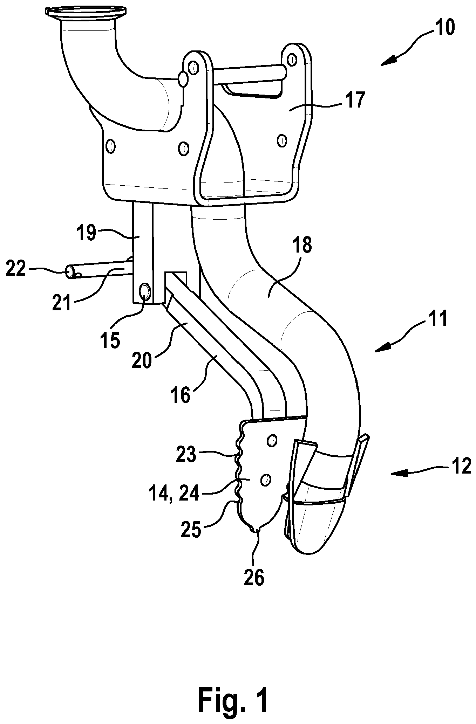

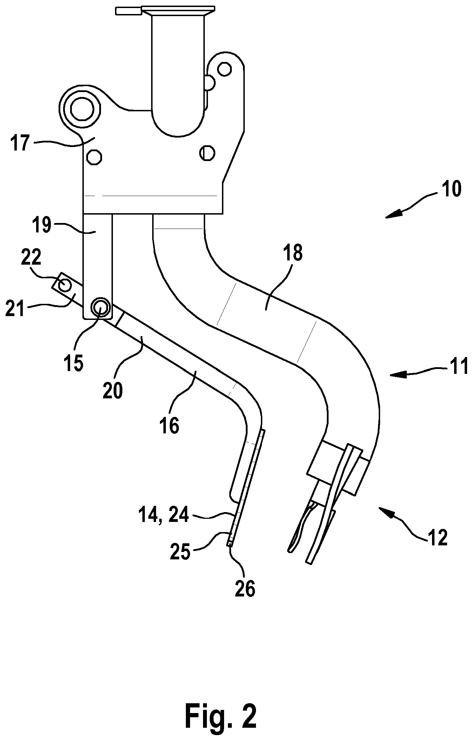

In der Figur 1 ist das erfindungsgemäße Werkzeug 10 in perspektivischer Ansicht gezeigt. Figur 2 zeigt das erfindungsgemäße Werkzeug 10 in Seitenansicht. Das Werkzeug 10 ist vorzugsweise Bestandteil einer - in der Zeichnung nicht gezeigten - Schlachtmaschine oder einer gesamten Schlachtmaschine. Besonders bevorzugt wird das Werkzeug 10 zusammen mit weiteren Werkzeugen zum Entfernen der Eingeweide eingesetzt.

Das Werkzeug 10 umfasst ein Saugelement 11 mit einem Saugkopf 12. Das Saugelement 11 sowie der Saugkopf 12 sind zum Absaugen der Eingeweide ausgebildet und eingerichtet. Hierzu wird das Saugelement 11 an eine - nicht gezeigte - Unterdruckeinheit angeschlossen. Optional umfasst das Saugelement 11 ein - in der Zeichnung nicht gezeigtes - Klemmelement zum Klemmen und/oder Quetschen der zu entfernenden Eingeweide. Das Klemmelement umfasst einen Klemmmechanismus, mittels dessen das Klemmelement in eine Klemmstellung zum Klemmen und/oder Quetschen der zu entfernenden Eingeweide bringbar ausgebildet ist.

Dem Saugelement 11 ist ein Schabeelement 14 zugeordnet. Vorzugsweise ist das Schabeelement 14 im Bereich des Saugkopfes 12 von diesem beabstandet angeordnet. Dabei ist das Schabeelement 14 an dem Saugelement 11 um mindestens eine Achse 15 schwenkbar angeordnet. Auf diese Weise ist das Schabeelement 14 derart ausgebildet und eingerichtet, dass dieses relativ zu dem Saugkopf 12 bewegbar ist. Besonders bevorzugt sind das Saugelement 11 und das Schabeelement 14 mittig auf einer gedachten Ebene angeordnet, die ebenfalls durch die Mittelgräte des zu entweidenden Fisches verläuft. Besonders bevorzugt kommt das erfindungsgemäße Werkzeug 10 beim Entweiden von auf einer Transporteinrichtung geförderten Fischen zum Einsatz, die mit der geöffneten Bauchhöhle nach oben orientiert sind. Das erfindungsgemäße Werkzeug 10 operiert in diesem Fall von oben in der Bauchhöhle des Fisches.

Weiter bevorzugt ist das Schabeelement 14 mittels eines Schwenkarmes 16 an dem Saugelement 11 schwenkbar angeordnet. Das Saugelement 11 umfasst beispielsweise ein mittels eines Halteelementes 17 gehaltenes Saugrohr 18. Vorzugweise umfasst das Halteelement 17 ein Lagerelement 19 zur Aufnahme der Achse 15, mittels derer der Schwenkarm 16 an dem Halteelement 17 schwenkbar angeordnet ist. Vorteilhafterweise ist der Schwenkarm 16 zumindest im Wesentlichen korrespondierend zu dem Saugrohr 18 ausgebildet, so dass der Schwenkarm 16 und das Saugrohr 18 in der in Figur 1 gezeigten Schwenkposition des Schwenkarmes 16 über weite Bereiche annähernd parallel ausgerichtet sind.

Gemäß einer vorteilhaften Weiterbildung der Erfindung ist an dem Schwenkarm 16 ein zum Verändern der Position des Schabeelements 14 relativ zu dem Saugkopf 12 eingerichtetes Verstellmittel (in der Zeichnung nicht gezeigt) angeordnet. Das Verstellmittel ist dabei eingerichtet, durch Schwenken des Schwenkarmes 16 das Schabeelement 14 relativ zu dem Saugkopf 12 zu bewegen und so dessen Position zu verändern. Vorteilhafterweise ist der Schwenkarm 16 bezüglich der Achse 15 zweiarmig ausgebildet. Der Schwenkarm 16 umfasst daher einen ersten Arm 20 und einen zweiten Arm 21. Das Schabeelement 14 ist an dem ersten Arm 20 angeordnet, während das Verstellmittel bevorzugt am dem zweiten Arm 21 angeordnet ist. Mögliche Anlenkpunkte 22 für das Verstellmittel sind in der Zeichnung beispielhaft dargestellt.

Besonders bevorzugt ist das Verstellmittel als Federelement ausgebildet. Ist das Verstellmittel zwischen einem der Anlenkpunkte 22 des zweiten Armes 21 und einem der Anlenkpunkte 22 des Halteelements 17 angeordnet, so ist das Verstellmittel vorzugsweise als Zugfeder ausgebildet. Es ist jedoch auch möglich, dass das Verstellmittel zwischen dem ersten Arm 20 und dem Halteelement 17 angeordnet ist. In diesem Fall ist das Verstellmittel vorzugsweise als Druckfeder ausgebildet.

Vorteilhafterweise ist das Federelement zum Voreinstellen der Federkraft ausgebildet und eingerichtet. Mit anderen Worten ist das Federelement derart eingerichtet, dass die auf den Schwenkarm 16 einwirkende Kraft bzw. das sich daraus ergebende Drehmoment vorwählbar eingerichtet ist.

Gemäß einer vorteilhaften alternativen Ausbildung der vorliegenden Erfindung ist das Verstellmittel ein steuerbarer Aktor. Vorzuweise ist der steuerbare Aktor in seiner Längsausdehnung verstellbar eingerichtet. Auf diese Weise kann der Winkel, um den der Schwenkarm 16 um die Achse 15 geschwenkt wird, aktiv gesteuert werden, so dass durch Vorgabe des Schwenkwinkels die Position des Schabeelements 14 vorgegeben werden kann. Als steuerbarer Aktor ist jedes Element geeignet, dessen Längsausdehnung mittels entsprechender Steuersignale veränderbar ausgebildet ist.

Besonders bevorzugt ist der Aktor zum Ausführen einer oszillierenden Bewegung ausgebildet und eingerichtet. Mit anderen Worten ist eine Steuereinrichtung vorgesehen, die den Aktor derart ansteuert, dass dieser oszillierende Bewegungen ausführt. Diese oszillierenden Bewegungen führen zu einem Heben und Senken des Schabeelements 14, so dass der die Andruckkraft des Schabeelements 14 auf die Mittelgräte bzw. die dort vorhandenen Blutnieren sich kontinuierlich wiederholend erhöht und erniedrigt wird. Vorzugsweise ist der Aktor ein druckluftgesteuerter Pneumatikzylinder.

Das Schabeelement 14 ist vorzugsweise als eine Schabeplatte 24 ausgebildet. Die den Fischflanken des Fisches zugewandte Seiten 23 der Schabeplatte 24 weisen zumindest jeweils auf einem Teilbereich eine Struktur auf. Mittels der Struktur wird ein zusätzlicher Reinigungseffekt erzielt. Besonders bevorzugt ist die Struktur rillenförmig ausgebildet und weist eine Reihe von Ausnehmungen 25 auf. Vorzugsweise umfasst die Schabeplatte 24 einen an ihrem unteren Ende angeordneten Vorsprung 26, der der Mittelgräte des Fisches zugewandt ist. Der Vorsprung 26 bewirkt ein verbessertes Lösen von Blutnieren.

Das erfindungsgemäße Werkzeug 10 mit den vorgenannten Merkmalen ist Bestandteil einer weiteren erfindungsgemäßen Vorrichtung zum Entweiden von in der Bauchhöhle geöffneten Fischen. Neben dem mindestens einen Werkzeug 10 zum Absaugen der Eingeweide umfasst die Vorrichtung die im Folgenden genannten weiteren Merkmale, die jedoch in der Zeichnung nicht gezeigt sind. Die Vorrichtung umfasst ein zum Erfassen der Fischgeometrie eingerichtetes Messmittel, mindestens eine zum Steuern des Werkzeugs 10 in Abhängigkeit der von dem Messmittel erfassten Fischgeometrie ausgebildetes Steuermittel und mindestens ein zum Bewegen des Werkzeugs relativ zu dem Fisch eingerichtete Positioniereinrichtung.

Das Messmittel ist vorzugsweise ein Tastsensor mit zugehöriger Auswerteelektronik, der die Erfassung der Fischgeometrie erlaubt. Alternativ ist das Messmittel als optoelektronischer Sensor ausgebildet. Das Steuermittel ist ferner derart eingerichtet, dass diese sowohl anhand der ermittelten Fischgeometrie das Einsteuern des Werkzeugs 10 mittels der Positioniereinrichtung in die geöffnete Bauchhöhle des Fisches ermöglicht, als auch während des Entweide- sowie Reinigungsvorgangs der Bauchhöhle das Werkzeug 10 innerhalb der Bauchhöhle an die gewünschten Positionen bewegt.

Vorteilhafterweise umfasst die Vorrichtung eine Fördereinrichtung, mittels derer die Fische auf dem Rücken liegend durch die Vorrichtung gefördert werden. Das Steuermittel sowie die Positioniereinrichtung sind in diesem Fall derart angepasst, dass die zuvor beschriebene Steuerung des Werkzeugs 10 zum Entweiden des Fisches während der Förderung der Fische erfolgt.

## Patentansprüche

1. Werkzeug (10) zum Entweiden von in der Bauchhöhle geöffneten Fischen, umfassend
ein Saugelement (11) mit einem Saugkopf (12) zum Absaugen der Eingeweide und
mindestens ein dem Saugelement (11) zugeordnetes Schabeelement (14), wobei das Schabeelement (14) an dem Saugelement (11) um mindestens eine Achse (15) derart schwenkbar angeordnet ist, dass das Schabeelement (14) relativ zu dem Saugkopf (12) bewegbar ausgebildet und eingerichtet ist,
wobei das Schabeelement (14) mittels eines Schwenkarmes (16) an dem Saugelement (11) schwenkbar angeordnet ist, und
wobei an dem Schwenkarm (16) ein zum Verändern der Position des Schabeelements (14) relativ zu dem Saugkopf (12) eingerichtetes Verstellmittel angeordnet ist,
**dadurch gekennzeichnet, dass** das Verstellmittel als Federelement ausgebildet ist.

2. Werkzeug nach Anspruch 1, **dadurch gekennzeichnet, dass** der Schwenkarm (16) bezüglich der Achse (15) zweiarmig ausgebildet ist, wobei das Schabeelement (14) an einem ersten Arm (20) und das Verstellmittel an einem zweiten Arm (21) des Schwenkarmes (16) angeordnet ist.

3. Werkzeug nach Anspruch 1 oder 2, **dadurch gekennzeichnet, dass** das Federelement zum Voreinstellen der Federkraft ausgebildet und eingerichtet ist.

4. Werkzeug nach einem der Ansprüche 1 bis 3, **dadurch gekennzeichnet, dass** das Verstellmittel einen steuerbaren Aktor umfasst.

5. Werkzeug nach Anspruch 4, **dadurch gekennzeichnet, dass** der Aktor zum Ausführen einer oszillierenden Bewegung ausgebildet und eingerichtet ist.

6. Werkzeug nach einem der Ansprüche 4 oder 5, **dadurch gekennzeichnet, dass** der Aktor ein Pneumatikzylinder ist.

7. Werkzeug nach einem der vorangehenden Ansprüche, **dadurch gekennzeichnet, dass** das Schabeelement (14) als eine Schabeplatte (24) ausgebildet ist, wobei die den Fischflanken zugewandte Seiten (23) der Schabeplatte (24) zumindest jeweils auf einem Teilbereich eine Struktur aufweisen.

8. Werkzeug nach einem der vorangehenden Ansprüche, **dadurch gekennzeichnet, dass** der Saugkopf (12) ein Klemmelement zum Klemmen und/oder Quetschen der zu entfernenden Eingeweide umfasst.

9. Vorrichtung zum Entweiden von in der Bauchhöhle geöffneten Fischen, umfassend
mindestens ein Werkzeug (10) zum Absaugen der Eingeweide,
ein zum Erfassen der Fischgeometrie eingerichtetes Messmittel,
mindestens ein zum Steuern des Werkzeugs (10) in Abhängigkeit der von dem Messmittel erfassten Fischgeometrie ausgebildetes Steuermittel und mindestens eine zum Bewegen des Werkzeugs (10) relativ zu dem Fisch eingerichtete Positioniereinrichtung,
**dadurch gekennzeichnet, dass**
das Werkzeug nach einem der Ansprüche 1 bis 8 ausgebildet ist.

## Claims

1. Tool (10) for gutting fish with opened abdominal cavities, comprising
a suction element (11) having a suction head (12) for suctioning off the internal organs and
at least one scraping element (14) assigned to the suction element (11),
wherein the scraping element (14) is arranged pivotably on the suction element (11) about at least one axis (15) such that the scraping element (14) is designed and configured to be movable relative to the suction head (12),
wherein the scraping element (14) is arranged pivotably on the suction element (11) by means of a pivot arm (16), and
wherein an adjusting means configured for changing the position of the scraping element (14) relative to the suction head (12) is arranged on the pivot arm (16),
**characterised in that** the adjusting means is designed as a spring element.

2. Tool according to claim 1, **characterised in that** the pivot arm (16) is of two-armed design with respect to the axis (15), wherein the scraping element (14) is arranged on a first arm (20) and the adjusting means is arranged on a second arm (21) of the pivot arm (16).

3. Tool according to claim 1 or 2, **characterised in that** the spring element is designed and configured for presetting the spring force.

4. Tool according to one of claims 1 to 3, **characterised in that** the adjusting means comprises a controllable actuator.

5. Tool according to claim 4, **characterised in that** the actuator is designed and configured to perform an oscillating movement.

6. Tool according to one of claims 4 or 5, **characterised in that** the actuator is a pneumatic cylinder.

7. Tool according to one of the preceding claims, **characterised in that** the scraping element (14) is configured as a scraping plate (24), wherein the sides (23) of the scraping plate (24) directed towards the fish flanks each have a texture at least in a partial region.

8. Tool according to one of the preceding claims, **characterised in that** the suction head (12) comprises a clamping element for clamping and/or squeezing the internal organs to be removed.

9. Apparatus for gutting fish with opened abdominal cavities, comprising
at least one tool (10) for suctioning off the internal organs,
a measuring means for detecting the fish geometry,
at least one control means configured to control the tool (10) dependent on the fish geometry detected by the measuring means and
at least one positioning device configured to move the tool (10) relative to the fish **characterised in that**
the tool is configured according to any one of claims 1 to 8.

## Revendications

1. Outil (10) destiné à vider des poissons ouverts dans la cavité abdominale, comprenant
un élément d'aspiration (11) avec une tête d'aspiration (12) destinée à aspirer les viscères, et
au moins un élément de raclage (14) associé à l'élément d'aspiration (11),
dans lequel l'élément de raclage (14) est agencé de manière pivotante au niveau de l'élément d'aspiration (11) autour d'au moins un axe (15) de telle façon que l'élément de raclage (14) est conçu et configuré pour être mobile relativement à la tête d'aspiration (12),
dans lequel l'élément de raclage (14) est agencé de manière pivotante au niveau de l'élément d'aspiration (11) au moyen d'un bras pivotant (16), et
dans lequel un moyen d'ajustage configuré pour modifier la position de l'élément de raclage (14) relativement à la tête d'aspiration (12) est agencé au niveau du bras pivotant (16),
**caractérisé en ce que** le moyen d'ajustage est conçu comme élément ressort.

2. Outil selon la revendication 1, **caractérisé en ce que** le bras pivotant (16) est conçu avec un design à deux bras par rapport à l'axe (15), dans lequel l'élément de raclage (14) est agencé au niveau d'un premier bras (20) et le moyen d'ajustage au niveau d'un second bras (21) du bras pivotant (16).

3. Outil selon la revendication 1 ou 2, **caractérisé en ce que** l'élément ressort est conçu et configuré pour prérégler la force de ressort.

4. Outil selon l'une quelconque des revendications 1 à 3, **caractérisé en ce que** le moyen d'ajustage comprend un actionneur commandable.

5. Outil selon la revendication 4, **caractérisé en ce que** l'actionneur est conçu et configuré pour exécuter un mouvement oscillant.

6. Outil selon l'une quelconque des revendications 4 ou 5, **caractérisé en ce que** l'actionneur est un vérin pneumatique.

7. Outil selon l'une quelconque des revendications précédentes, **caractérisé en ce que** l'élément de raclage (14) est conçu sous forme d'une plaque de raclage (24), dans lequel les côtés (23) de la plaque de raclage (24) dirigés vers les flancs du poisson présentent chacun une texture au moins dans une région partielle.

8. Outil selon l'une quelconque des revendications précédentes, **caractérisé en ce que** la tête d'aspiration (12) comprend un élément de serrage destiné à serrer et/ou écraser les viscères qu'il s'agit d'enlever.

9. Dispositif destiné à vider des poissons ouverts dans la cavité abdominale, comprenant
au moins un outil (10) destiné à aspirer les viscères,
un moyen de mesure configuré pour détecter la géométrie du poisson,
au moins un moyen de commande conçu pour commander l'outil (10) en dépendance de la géométrie du poisson détectée par le moyen de mesure, et au moins un système de positionnement configuré pour déplacer l'outil (10) relativement au poisson,
**caractérisé en ce que**
l'outil est conçu selon l'une quelconque des revendications 1 à 8.
